# EUROPEAN PATENT APPLICATION

(11) **EP 4 435 055 A1**
(43) Date of publication of application: **25.09.2024**
(21) Application number: 22895519.1
(22) Date of filing: 10.11.2022
(51) Int. Cl.: C08L 75/04, B32B 5/18, B32B 27/40, C08G 18/00, C08G 18/08, C08G 18/48, C08J 9/04, C08K 5/053, C08K 5/09

(54) **URETHANE RESIN COMPOSITION AND LAMINATE**

(30) Priority: 18.11.2021 JP 2021187751
(71) Applicant: DIC Corporation, Tokyo 174-8520 (JP)
(72) Inventor: FUJISHITA Norie, Takaishi-shi, Osaka 592-0001 (JP); MAEDA Ryo, Takaishi-shi, Osaka 592-0001 (JP); TETSUI Tomohiro, Takaishi-shi, Osaka 592-0001 (JP)
(74) Representative: Kraus & Lederer PartGmbB
(86) International application number: PCT/JP2022/041828
(87) International publication number: WO 2023/090237

(57) **Abstract**

The present invention provides a urethane resin composition containing a urethane resin (A) having a hydrophilic group, water (B), and a film-forming aid (C) containing a compound (c1) having a molecular weight of 300 or less having two to four alcoholic hydroxy groups. The present invention also provides a laminate having at least a substrate (i) and a foaming layer (ii) formed of the urethane resin composition. This urethane resin composition has excellent blending stability and can form a coating film having excellent crack resistance and texture even under mechanical foaming.

## Description

### Technical Field

The present invention relates to a urethane resin composition containing water.

### Background Art

A urethane resin is widely used in production of synthetic leathers (including artificial leathers) since the urethane resin has high mechanical strength and a favorable texture. The mainstream of this application has been a solvent-based urethane resin containing N,N-dimethylformamide (DMF) so far. However, from backgrounds of DMF regulation in EU, enhancement of VOC emission regulation in China and Taiwan, DMF regulations by major apparel makers, and the like, there is a need for elimination of DMF from a urethane resin composition for layers constituting a synthetic leather.

In such a situation, a urethane dispersion (PUD) in which a urethane resin is dispersed in water begins to be studied as an alternative material for a conventional intermediate porous layer formed by wet coagulation of a solvent-based urethane resin. In order to impart the same texture and the like as those of a wet film-formed product, a foam of PUD is variously studied as the alternative.

As a method for obtaining the foam of PUD, for example, mechanical foaming of blending a microcapsule or dispersing gas such as carbon dioxide in a PUD-blended liquid, and the like are studied (for example, see PTL 1). However, a method for blending a microcapsule causes a problem such as a poor texture of an obtained foam and poor smoothness due to expansion of the microcapsule. A method for dispersing gas is difficult to control the size of the foam and the like and stably produce a synthetic leather having a favorable texture because of elimination or the like of gas bubbles mixed in a blended liquid during production of the foam.

From the backgrounds, as a recent method for simply obtaining a foam, a mechanical foaming procedure in which PUD is stirred and whipped with a machine is studied. However, the mechanical foaming procedure has problems in which expression of physical properties, such as a texture and flexibility at low temperature, is not stable because of cracking of a coating film especially during drying, or coalescence of bubbles or defoaming after a foaming operation.

### Citation List

### Patent Literature

PTL 1: Japanese Unexamined Patent Application Publication No. 2007-191810

### Summary of Invention

### Technical Problem

An object of the present invention is to provide a urethane resin composition containing water that has excellent blending stability of a blended liquid and can form a coating film having excellent crack resistance and texture even under mechanical foaming.

### Solution to Problem

The present invention provides a urethane resin composition containing a urethane resin (A) having a hydrophilic group, water (B), and a film-forming aid (C) containing a compound (c1) having a molecular weight of 300 or less having two to four alcoholic hydroxy groups. The present invention provides a laminate having at least a substrate (i) and a foaming layer (ii) formed of the urethane resin composition.

### Advantageous Effects of Invention

The urethane resin composition of the present invention contains water, and is environment-friendly. The urethane resin composition of the present invention also has excellent blending stability of a blended liquid. The urethane resin composition of the present invention can form a coating film having excellent crack resistance and texture even under mechanical foaming. Therefore, the urethane resin composition of the present invention can be suitably used as a material for a synthetic leather, and particularly suitably used as a foaming layer of a synthetic leather. Description of Embodiments

A urethane resin composition of the present invention contains a urethane resin (A) having a hydrophilic group, water (B), and a specific film-forming aid (C).

In the present invention, the specific film-forming aid (C) is necessarily contained. By using the specific film-forming aid (C), the blending stability of a blended liquid is excellent, and the foam retention in the system is improved even after mechanical foaming of the urethane resin composition. This assumes that cracking of the coating film can be prevented, and a coating film having excellent texture is obtained.

The film-forming aid (C) necessarily contain a compound (c1) having a molecular weight of 300 or less having two to four alcoholic hydroxy groups. The compound (c1) has high hydrophilicity with water and forms hydrogen bonds with urethane, making the water volatilization rate during drying mild and uniform. This assumes that cracking during drying of the coating film was able to be reduced. The molecular weight of the compound (c1) is preferably 60 to 300 and more preferably 60 to 180. The molecular weight of the compound (c1) denotes a value determined from a chemical formula.

As the compound (c1), for example, glycol compounds such as ethylene glycol, propylene glycol, diethylene glycol, 1,3-propanediol, 1,2-butanediol, 1,3-butanediol, 1,4-butanediol, 1,5-pentanediol, 1,6-hexanediol, 1,7 heptanediol, 1,8-octanediol, 1,9-nonanediol, 1,10-decanediol, 1,12-dodecanediol, triethylene glycol, tetraethylene glycol, dipropylene glycol, tripropylene glycol, neopentyl glycol, 2,2-diethyl-1,3-propanediol, 2,2-dimethyl-1,3-propanediol, 2,2-diethylpropanediol, 3-methyl-1,5-pentanediol, 2-ethyl-2-butyl-1,3-propanediol, 2-methyl-1,8-octanediol, and 2,4-diethyl-1,5-pentanediol; compounds having three alcoholic hydroxy groups such as trimethylol ethane, trimethylol propane, and glycerin; compounds having four alcoholic hydroxy groups such as pentaerythritol, or the like can be used. The compounds may be used alone, or two or more types thereof may be used in combination. Among these, 1,3-butanediol and/or propylene glycol are more preferred since more excellent blending stability, crack resistance, and texture are achieved.

The content of the compound (C1) is preferably 0.1 to 50 parts by mass, and more preferably 1 to 40 parts by mass, relative to 100 parts by mass of the urethane resin (A).

Other film-forming aids other than the compound (c1) may be used in combination with the film-forming aid (C) if necessary.

As the other film-forming aids, for example, polyethylene glycol, polyethylene glycols having an alkoxy group having 11 or less (preferably 1 to 3) carbon atoms, polyoxyethylene alkyl ethers, polyoxyethylene sorbitan fatty acid esters, polyglycerin fatty acid esters, or the like can be used. The compounds may be used alone, or two or more types thereof may be used in combination.

The weight-average molecular weights of the polyethylene glycol and the polyethylene glycols having an alkoxy group having 11 or less (preferably 1 to 3) carbon atoms are, for example, preferably in the range of 100 to 4,000, more preferably 100 to 3,000, and still more preferably 400 to 2,000. The number-average molecular weights of the polyethylene glycol and the polyethylene glycols having an alkoxy group having 11 or less (preferably 1 to 3) carbon atoms denote a value determined by gel permeation chromatography (GPC).

As the polyoxyethylene alkyl ethers, for example, polyoxyethylene lauryl ether, polyoxyethylene cetyl ether, polyoxyethylene stearyl ether, polyoxyethylene oleyl ether, or the like can be used. The compounds may be used alone, or two or more types thereof may be used in combination. In particular, the number of added moles of a structure represented by the following formula (1) is preferably 30 or more, more preferably 50 or more, and still more preferably 80 or more since high hydrophilicity and very excellent foam retention, crack resistance, texture, and low-temperature flexibility are achieved. The upper limit thereof is preferably 200 or less, more preferably 150 or less, and still more preferably 130 or less.

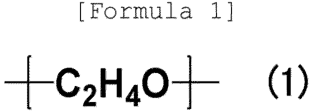

As the polyoxyethylene sorbitan fatty acid esters, for example, a polyoxyethylene sorbitan mono-coconut oil fatty acid ester, polyoxyethylene sorbitan monopalmitate, polyoxyethylene sorbitan monostearate, polyoxyethylene sorbitan monolaurate, polyoxyethylene sorbitan monolaurate tristearate, polyoxyethylene sorbitan monolaurate monooleate, or the like can be used. The compounds may be used alone, or two or more types thereof may be used in combination. In particular, the number of added moles of a structure represented by the formula (1) is preferably 30 or more, more preferably 50 or more, and still more preferably 70 or more since high hydrophilicity and very excellent foam retention, crack resistance, texture, and low-temperature flexibility are achieved. The upper limit thereof is preferably 200 or less, more preferably 150 or less, and still more preferably 100 or less.

As the polyglycerol fatty acid ester, for example, polyglyceryl monocaprate, polyglyceryl monolaurate, polyglyceryl monomyristate, polyglyceryl monooleate, polyglyceryl monostearate, polyglyceryl dioleate, polyglyceryl distearate, polyglyceryl pentaoleate, or the like can be used. The compounds may be used alone, or two or more types thereof may be used in combination. In particular, the hydrophilic-lipophilic balance (HLB) value is preferably 5 or more, more preferably 10 or more, and still more preferably 14 or more since high hydrophilicity and very excellent foam retention, crack resistance, texture, and low-temperature flexibility are achieved. The upper limit thereof is preferably 25 or less, more preferably 20 or less, and still more preferably 18 or less.

The other film-forming aids may be used alone, or two or more types thereof may be used in combination. The total amount of the other film-forming aids used is preferably in the range of 0.05 to 50 parts by mass, and preferably 0.1 to 20 parts by mass, relative to 100 parts by mass of the urethane resin (A) (= solid content) described below.

The urethane resin (A) can be dispersed in water and is, for example, a urethane resin having a hydrophilic group such as an anionic group, a cationic group, or a nonionic group. These types of urethane resins may be used alone, or two or more types thereof may be used in combination. Among these, urethane resins having an anionic group and/or a nonionic group are more preferred in view of production stability and water dispersion stability.

Examples of a method for obtaining the urethane resin having an anionic group include a method using one or more compounds selected from the group consisting of a glycol compound having a carboxy group and a compound having a sulfonyl group as a raw material.

As the glycol compound having a carboxy group, for example, 2,2-dimethylolpropionic acid, 2,2-dimethylolbutanoic acid, 2,2-dimethylolbutyric acid, 2,2-dimethylolpropionic acid, 2,2-valeric acid, or the like can be used. The compounds may be used alone, or two or more types thereof may be used in combination.

As the compound having a sulfonyl group, for example, 3,4-diaminobutanesulfonic acid, 3,6-diamino-2-toluenesulfonic acid, 2,6-diaminobenzenesulfonic acid, N-(2-aminoethyl)-2-aminosulfonic acid, N-(2-aminoethyl)-2-aminoethyl sulfonic acid, N-(2-aminoethane-2-aminosulfonic acid, or N-(2-aminoethyl)-β-alanine; or salts thereof can be used. The compounds may be used alone, or two or more types thereof may be used in combination.

Examples of a method for obtaining the urethane resin having a nonionic group include a method using a compound having an oxyethylene structure as a raw material.

As the compound having an oxyethylene structure, for example, polyethylene glycol, polyoxyethylene polyoxypropylene glycol, polyoxyethylene polyoxytetramethylene glycol, or a polyether polyol having an oxyethylene structure, such as polyethylene glycol dimethyl ether, can be used. The compounds may be used alone, or two or more types thereof may be used in combination. Among these, polyethylene glycol and/or polyethylene glycol dimethyl ether are preferably used since hydrophilicity can be more simply controlled.

The number-average molecular weight of the raw material used to obtain the urethane resin having a nonionic group is preferably in the range of 200 to 10,000, more preferably 300 to 3,000, and still more preferably 300 to 2,000 since more excellent emulsifying property and water dispersion stability are achieved. The number-average molecular weight of the raw material used to obtain the urethane resin having a nonionic group denotes a value determined by gel permeation chromatography (GPC).

Examples of a method for obtaining the urethane resin having a cationic group include a method using one or two or more compounds having an amino group as a raw material.

As the compound having an amino group, for example, compounds having primary and secondary amino groups such as triethylenetetramine and diethylenetriamine; compounds having a tertiary amino group such as N-alkyldialkanolamines such as N-methyldiethanolamine and N-ethyldiethanolamine and N-alkyldiaminoalkylamines such as N-methyldiaminoethylamine and N-ethyldiaminoethylamine, or the like can be used. The compounds may be used alone, or two or more types thereof may be used in combination.

For the urethane resin (A), specifically, for example, a reactant of a chain-elongating agent (a1), a polyol (a2), a polyisocyanate (a3), and, if necessary, a compound (a4) having a hydrophilic group (raw materials used to obtain the urethane resin having an anionic group, the urethane resin having a cationic group, and the urethane resin having a nonionic group) can be used.

As the chain-elongating agent (a1), a compound having a molecular weight of less than 500 (preferably in the range of 50 to 450) can be used, and specifically a chain-elongating agent having a hydroxy group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerol, sorbitol, bisphenol A, 4,4'-dihydroxydiphenyl, 4,4'-dihydroxydiphenyl ether, or trimethylolpropane; a chain-elongating agent having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, or hydrazine, or the like can be used. The chain-elongating agents may be used alone, or two or more types thereof may be used in combination. The molecular weight of the chain-elongating agent (a1) denotes a value determined from a chemical formula.

As the chain-elongating agent (a1), the chain-elongating agent having an amino group (hereinafter abbreviated as "amine-based chain-elongating agent") is preferably used. This is because a chain can be easily elongated even at a lower temperature of 30°C or lower and energy consumption in a reaction can be reduced, more excellent mechanical strength, film-forming property, texture, and peel strength due to the introduction of a urea group are achieved. An amine-based chain-elongating agent having a molecular weight of 30 to 250 is more preferably used since more excellent foam retention, emulsifying property, and water dispersion stability are achieved even when the solid content of the urethane resin (X) is increased. When two or more types of the chain-elongating agents are used in combination, the molecular weight represents the average value thereof, and the average value need only be included in the preferable range of the molecular weight.

The proportion of the chain-elongating agent (a1) used in the total mass of the raw materials constituting the urethane resin (A) is more preferably in the range of 0.1 to 30% by mass, and particularly preferably 0.5 to 10% by mass since more excellent mechanical strength, film-forming property, texture, peel strength, foam retention, emulsifying property, and water dispersion stability are achieved and the solid content of the urethane resin (A) is more easily increased.

As the polyol (a2), for example, a polyether polyol, a polyester polyol, a polyacrylic polyol, a polycarbonate polyol, a polybutadiene polyol, or the like can be used. The polyols may be used alone, or two or more types thereof may be used in combination. When the urethane resin having a nonionic group is used as the urethane resin (A), for the polyol (a2), anything other than the raw material used to obtain the urethane resin having a nonionic group is used.

From the viewpoint of the mechanical strength of the coating film obtained, the number-average molecular weight of the polyol (a2) is preferably in the range of 500 to 100,000, and more preferably 800 to 10,000. The number-average molecular weight of the polyol (a2) denotes a value determined by gel permeation chromatography (GPC).

The proportion of the polyol (a2) used in the total mass of the raw materials constituting the urethane resin (A) is preferably in the range of 40 to 90% by mass, and particularly preferably 50 to 80% by mass since more excellent mechanical strength is achieved.

As the polyisocyanate (a3), for example, an aromatic polyisocyanate, such as phenylene diisocyanate, toluene diisocyanate, diphenylmethane diisocyanate, xylylene diisocyanate, naphthalene diisocyanate, polymethylenepolyphenyl polyisocyanate, or carbodiimidized diphenylmethane diisocyanate; an aliphatic polyisocyanate or an alicyclic polyisocyanate, such as hexamethylene diisocyanate, lysine diisocyanate, cyclohexane diisocyanate, isophorone diisocyanate, dicyclohexylmethane diisocyanate, xylylene diisocyanate, tetramethylxylene diisocyanate, dimer acid isocyanate, or norbornene diisocyanate, or the like can be used. The polyisocyanates may be used alone, or two or more types thereof may be used in combination.

The proportion of the polyisocyanate (a3) used in the total mass of the raw materials constituting the urethane resin (A) is preferably in the range of 5 to 40% by mass, and particularly preferably 10 to 35% by mass since more excellent mechanical strength is achieved.

The proportion of the compound (a4) having a hydrophilic group used in the total mass of the raw materials constituting the urethane resin (A) is more preferably in the range of 0.25 to 2% by mass, and particularly preferably 0.5 to 1.8% by mass since more excellent foam retention, emulsifying property, water dispersion stability, and film-forming property are achieved.

The average particle diameter of the urethane resin (A) is preferably in the range of 0.01 to 1 um, and more preferably 0.05 to 0.9 um since more excellent foam retention, surface smoothness, texture, crack resistance, and film-forming property are achieved. A method for measuring the average particle diameter of the urethane resin (X) will be described in Examples below.

The content of the urethane resin (A) in the urethane resin composition of the present invention is preferably 10 to 90% by mass, more preferably 20 to 70% by mass.

As water (B) used in the present invention, ion exchanged water, distilled water, or the like can be used. These types of water may be used alone, or two or more types thereof may be used in combination.

Next, a method for producing a urethane resin water dispersion used in the present invention will be described.

The method for producing the urethane resin water dispersion used in the present invention includes a step of reacting the polyol (a2), the polyisocyanate (a3), and the compound (a4) having a hydrophilic group in the absence of a solvent to obtain a urethane prepolymer (i) having an isocyanate group (hereinafter abbreviated as "prepolymer step"), a step of dispersing the urethane prepolymer (i) in the water (hereinafter abbreviated as "emulsification step"), and then a step of reacting the chain-elongating agent (a1) to obtain the urethane resin (X) (hereinafter abbreviated as "chain-elongation step").

Examples of the prepolymer step include a method performed in an organic solvent such as methyl ethyl ketone or acetone; a reactor equipped with a stirrer blade; a kneading machine such as a kneader, a continuous kneader, a taper-roll, a single-screw extruder, a twin-screw extruder, a triple-screw extruder, a versatile mixer, Plastomill, or a votator-type kneader; a rotary dispersion mixer such as a TK homomixer, Filmix, Ebara milder, Clear mix, Ultra Turrax, Cavitron, or Biomixer; an ultrasonic disperser; and a method performed in the absence of a solvent using a machine having no movable portion and capable of mixing by a flow of a fluid itself, such as an in-line mixer.

In the prepolymer step, the molar ratio of the isocyanate group of the polyisocyanate (a3) to a total of the hydroxy group of the polyol (a2) and the hydroxy group and amino group of the compound (a4) having a hydrophilic group [isocyanate group/(hydroxy group + amino group)] is preferably in the range of 1.1 to 3, and more preferably 1.2 to 2 because more excellent foam retention, surface smoothness, film-forming property, texture, peel strength, and mechanical strength are achieved.

In the prepolymer step, the reaction is performed, for example, at 50 to 120°C for 1 to 10 hours.

The chain-elongation step is a step of increasing the molecular weight of the urethane prepolymer (i) by a reaction between the isocyanate group of the urethane prepolymer (i) and the chain-elongating agent (a1), to obtain the urethane resin (A). From the viewpoint of productivity, the chain-elongation step is preferably performed at a temperature of 50°C or lower.

In the chain-elongation step, the molar ratio of a total of the hydroxy group and amino group of the chain-elongating agent (a1) to the isocyanate group of the urethane prepolymer (i) [(hydroxy group + amino group)/isocyanate group] is preferably in the range of 0.8 to 1.1, and more preferably 0.9 to 1 since more excellent film-forming property and mechanical strength are achieved.

The chain-elongation step can be performed using the same equipment as those in the prepolymer step.

Although the urethane resin composition of the present invention contains as essential components the urethane resin (A), water (B), and the film-forming aid (C), an optional additive other than these may be contained as necessary.

As the optional additive, for example, a surfactant, a cross-linking agent, an emulsifier, a neutralizer, a thickener, a urethane-forming catalyst, a filler, a pigment, a dye, a flame retarder, a leveling agent, an antiblocking agent, or the like can be used. The additives may be used alone, or two or more types thereof may be used in combination. In production of the urethane resin (A), it is preferable that an organic solvent be not substantially contained, but the organic solvent may be added as the additive.

As the surfactant, a surfactant (D) having a hydrophobic moiety having 10 or more carbon atoms is preferably used since the surfactant prevents disappearance of bubbles produced by mechanical foaming and achieves very excellent crack resistance and texture.

As the surfactant (D), for example, a surfactant represented by the following formula (2); a fatty acid salt, a succinate salt, a sulfosuccinate salt, an octadecylsulfosuccinate salt, a sulfosuccinate ester, or the like can be used. The surfactants may be used alone, or two or more types thereof may be used in combination.
[Formula 2]

**RCO₂** ⁻ **X** ⁺ **(2)**

In the formula (2), R represents a linear or branched alkyl group having 10 to 20 carbon atoms, and X represents Na, K, NH₄, morpholine, ethanolamine, or triethanolamine.

Among the aforementioned compounds, the surfactant (D) used is preferably the surfactant represented by the formula (2), more preferably the surfactant represented by the formula (2) in which R represents a linear alkyl group having 13 to 19 carbon atoms, and particularly preferably a stearate salt since more excellent foam retention is achieved.

When the surfactant (D) is used, the amount of the surfactant (D) used is preferably in the range of 0.01 to 30 parts by mass, and more preferably 0.1 to 20 parts by mass, relative to 100 by mass of the urethane resin (A) (= solid content) since more excellent foam retention is achieved.

Next, a laminate of the present invention will be described.

The laminate has at least a substrate (i) and a foaming layer (ii) formed of the urethane resin composition.

As the substrate (i), for example, a fiber substrate such as a nonwoven fabric, a woven fabric, or a knit fabric formed from polyester fibers, polyethylene fibers, nylon fibers, acrylic fibers, polyurethane fibers, acetate fibers, rayon fibers, polylactate fibers, cotton, hemp, silk, wool, glass fibers, carbon fibers, or blended fibers thereof; the nonwoven fabric impregnated with a resin such as a polyurethane resin; the nonwoven fabric further having a porous layer; a resin substrate such as a thermoplastic urethane (TPU), or the like can be used.

Next, a method for producing the laminate of the present invention will be described.

Examples of the method for producing the laminate include:
(X) a method in which the urethane resin composition is foamed, to obtain a foaming liquid, the foaming liquid is applied to a release paper and dried, and the release paper is bonded to the substrate (i);
(Y) a method in which the urethane resin composition is foamed, to obtain a foaming liquid, the foaming liquid is applied to a surface layer produced on a release paper and dried, and the surface layer is bonded to the substrate (i); and
(Z) a method in which the urethane resin composition is foamed, to obtain a foaming liquid, the foaming liquid is applied to the substrate (i), and dried, and if necessary, the substrate (i) is bonded to a surface layer (iii) produced on a release paper.

Examples of a method for foaming the urethane resin composition to obtain a foaming liquid include stirring with the hand, and mechanical foaming using a mixer such as a mechanical mixer. In particular, the method using a mixer is preferred since the foaming liquid is easily obtained. When the mixer is used, for example, the method includes stirring at 500 to 3,000 rpm for 10 seconds to 10 minutes. In this case, the volume after foaming is preferably 1.3 to 7 times, and more preferably 1.2 to 2 times the volume prior to foaming since the foaming layer (ii) having a favorable texture is obtained.

Examples of a method for applying the obtained foaming liquid to the substrate (i) or the like include methods using a roll coater, a knife coater, a comma coater, an applicator, and the like.

Examples of a method for drying the applied substance include a drying method at a temperature of 60 to 130°C for 30 seconds to 10 minutes.

The thickness of the foaming layer (ii) obtained by the aforementioned method is, for example, 5 to 300 um.

The density of the foaming layer (ii) is preferably in the range of 200 to 1,000 kg/m³, and more preferably 400 to 800 kg/m³ since a more excellent texture is achieved. The density of the foaming layer (ii) denotes a value obtained by subtracting the weight of the substrate (i) per area of a square with sides of 10 cm from the weight of the laminate per area of a square with sides of 10 cm and dividing the resultant value by the thickness of the foaming layer (ii).

The surface layer (iii) can be formed by a publicly known method using a publicly known material, for example, a solvent-based urethane resin, an aqueous urethane resin, a silicone resin, a polypropylene resin, or a polyester resin. When importance is placed on a flexible texture, heat resistance, and hydrolysis resistance, a polycarbonate-based urethane resin is preferably used. For a reduction in DMF in an environment-friendly manner, an aqueous polycarbonate-based urethane resin is more preferably used.

On the surface layer (iii), if necessary, a surface treatment layer (iv) may be further provided for an enhancement in scratch resistance, impartation of gloss, and the like. The surface treatment layer (iv) can be formed by a publicly known method using a publicly known material.

The urethane resin composition of the present invention contains water, and is environment-friendly. The urethane resin composition of the present invention also has excellent blending stability of a blended liquid. The urethane resin composition of the present invention can form a coating film having excellent crack resistance and texture even under mechanical foaming. Therefore, the urethane resin composition of the present invention can be suitably used as a material for a synthetic leather, and particularly suitably used as a foaming layer of a synthetic leather. Examples

Hereinafter, the present invention will be described in detail using Examples.

### [Synthesis Example 1] Preparation of urethane resin (A-1) composition

In the presence of 0.1 parts by mass of tin(II) octylate, 1,000 parts by mass of polyether polyol ("PTMG2000" available from Mitsubishi Chemical Corporation, number-average molecular weight: 2,000), 38 parts by mass of polyethylene glycol ("PEG600" available from NOF CORPORATION, number-average molecular weight: 600), and 262 parts by mass of dicyclohexylmethane diisocyanate (HMDI) were reacted at 100°C until the NCO percent reached 2.8%, to obtain a urethane prepolymer.

The urethane prepolymer heated to 70°C, 65 parts by mass of aqueous 20% sodium dodecylbenzenesulfonate solution ("NEOGEN S-20F" available from DKS Co., Ltd.) as an emulsifier, and 948 parts by mass of water were stirred and mixed with a homomixer, to obtain an emulsion liquid. Subsequently, a water-diluted solution of isophoronediamine (IPDA) having an amino group content equal to the molar amount of the NCO group was immediately added, resulting in chain elongation. Finally, a urethane resin (A-1) composition in which the content of the urethane resin (A-1) was 58% by mass was obtained.

### [Synthesis Example 2] Preparation of urethane resin (A-2) composition

In the presence of 0.1 parts by mass of tin(II) octylate, 1,000 parts by mass of polycarbonate polyol (formed from 1,6-hexanediol as a raw material, number-average molecular weight: 2,000), 18 parts by mass of PEG600, and 262 parts by mass of HMDI were reacted at 100°C until the NCO percent reached 3.1%, to obtain a urethane prepolymer.

The urethane prepolymer heated to 70°C, 64 parts by mass of aqueous 20% sodium dodecylbenzenesulfonate solution ("NEOGEN S-20F" available from DKS Co., Ltd.) as an emulsifier, and 811 parts by mass of water were stirred and mixed with a homomixer, to obtain an emulsion liquid. Subsequently, a water-diluted solution of IPDA having an amino group content corresponding to 95% of the molar amount of the NCO group was immediately added, resulting in chain elongation. Finally, a urethane resin (A-2) composition in which the content of the urethane resin (A-2) was 60% by mass was obtained.

### [Synthesis Example 3] Preparation of urethane resin (A-3) composition

To a four-necked flask equipped with a stirrer, reflux cooling tube, a thermometer, and a nitrogen blowing tube, 500 parts by mass of PTMG-2000, 13 parts by mass of dimethylolpropionic acid (hereinafter abbreviated as "DMPA"), and 443 parts by mass of methyl ethyl ketone were added under a nitrogen stream. After uniformly mixing them together, 152 parts by mass of isophorone diisocyanate (hereinafter abbreviated as "IPDI") was added. Next, 0.1 part by mass of bismuth octylate was added, and they were reacted at 70°C for about 1 hour to obtain a methyl ethyl ketone solution of a urethane polymer. Next, 20 parts by mass of triethylamine was added to the methyl ethyl ketone solution of the urethane polymer obtained by the above method and mixed therewith, then 691 parts by mass of ion exchanged water was added, 26 parts by mass of piperazine was added, and then methyl ethyl ketone was distilled off under reduced pressure to obtain a urethane resin composition containing a urethane resin (A-3).

### [Example 1]

100 g of the urethane resin (A-1) composition obtained in Synthesis Example 1, 2.0 g of thickener "Borch Gel ALA" (available from Borchers), 2.0 g of ammonium stearate, and 5.0 g of 1,3-butanediol (hereinafter abbreviated as "BG") were stirred at 1,500 rpm with a mechanical mixer, to blow air, and thus a blended liquid having a volume corresponding to 150% of the initial volume was obtained.

This blended liquid was applied to a release paper, and dried at 120°C for 3 minutes, to obtain a urethane foaming layer having a thickness of 300 um, and this laminate was bonded to a polyester fiber nonwoven fabric, to obtain a synthetic leather.

### [Example 2]

100 g of the urethane resin (A-2) composition obtained in Synthesis Example 2, 2.0 g of thickener "Borch Gel ALA" (available from Borchers), 2.0 g of ammonium stearate, and 5.0 g of BG were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 um, and this laminate was bonded to a polyester fiber nonwoven fabric, to obtain a synthetic leather.

### [Example 3]

100 g of the urethane resin (A-3) composition obtained in Synthesis Example 3, 2.0 g of thickener "Borch Gel ALA" (available from Borchers), 2.0 g of ammonium stearate, and 5.0 g of propylene glycol (hereinafter abbreviated as "PG") were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 um, and this laminate was bonded to a nonwoven fabric, to obtain a synthetic leather.

### [Example 4]

100 g of the urethane resin (A-3) composition obtained in Synthesis Example 3, 2.0 g of thickener "Borch Gel ALA" (available from Borchers), 2.0 g of ammonium stearate, 5.0 g of BG, and 3.0 g of polyoxyethylene lauryl ether ("NONION K-2100W" available from NOF CORPORATION, hereinafter abbreviated as "K-2100W") were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 um, and this laminate was bonded to a nonwoven fabric, to obtain a synthetic leather.

### [Example 5]

100 g of the urethane resin (A-3) composition obtained in Synthesis Example 3, 2.0 g of thickener "Borch Gel ALA" (available from Borchers), 2.0 g of ammonium stearate, 5.0 g of BG, and 3.0 g of methoxy polyethylene glycol ("UNIOX M-550" available from NOF CORPORATION, hereinafter abbreviated as "MPEG") were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 um, and this laminate was bonded to a nonwoven fabric, to obtain a synthetic leather.

### [Comparative Example 1]

100 g of the urethane resin (A-3) composition obtained in Synthesis Example 3, 2.0 g of thickener "Borch Gel ALA" (available from Borchers), and 2.0 g of ammonium stearate were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 um, and this laminate was bonded to a nonwoven fabric, to obtain a synthetic leather.

### [Comparative Example 2]

100 g of the urethane resin (A-3) composition obtained in Synthesis Example 3, 2.0 g of thickener "Borch Gel ALA" (available from Borchers), 2.0 g of ammonium stearate, and 5.0 g of methanol were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 um, and this laminate was bonded to a nonwoven fabric, to obtain a synthetic leather.

### [Method for Measuring Number-Average Molecular Weight and the like]

The number-average molecular weights of polyols used in Synthesis Examples and Comparative Synthesis Examples denote a value determined by measuring under the following conditions by gel permeation chromatography (GPC).

### Measuring apparatus: high-speed GPC device ("HLC-8220GPC" manufactured by TOSOH CORPORATION)

Column: the following columns manufactured by TOSOH CORPORATION were connected in series for use.
"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (differential refractometer)
Column temperature: 40°C
Eluent: tetrahydrofuran (THF)
Flow rate: 1.0 mL/min
Injection volume: 100 µL (tetrahydrofuran solution in which the sample concentration was 0.4% by mass)
Standard sample: a standard curve was created using each of the following standard polystyrenes

### (Standard polystyrene)

"TSKgel standard polystyrene A-500" available from TOSOH CORPORATION
"TSKgel standard polystyrene A-1000" available from TOSOH CORPORATION
"TSKgel standard polystyrene A-2500" available from TOSOH CORPORATION
"TSKgel standard polystyrene A-5000" available from TOSOH CORPORATION
"TSKgel standard polystyrene F-1" available from TOSOH CORPORATION
"TSKgel standard polystyrene F-2" available from TOSOH CORPORATION
"TSKgel standard polystyrene F-4" available from TOSOH CORPORATION
"TSKgel standard polystyrene F-10" available from TOSOH CORPORATION
"TSKgel standard polystyrene F-20" available from TOSOH CORPORATION
"TSKgel standard polystyrene F-40" available from TOSOH CORPORATION
"TSKgel standard polystyrene F-80" available from TOSOH CORPORATION
"TSKgel standard polystyrene F-128" available from TOSOH CORPORATION
"TSKgel standard polystyrene F-288" available from TOSOH CORPORATION
"TSKgel standard polystyrene F-550" available from TOSOH CORPORATION

### [Method for Measuring Average Particle Diameter of Urethane Resin (A)]

For the urethane resin compositions obtained in Examples and Comparative Examples, the average particle diameter on an area basis was measured with a laser diffraction/scattering particle size distribution measuring device ("LA-910" manufactured by Horiba, Ltd.) at a relative refractive index of 1.10 using water as a dispersion liquid.

### [Method for Evaluating Blended Liquid Stability]

The appearances of the blended liquids obtained in Examples and Comparative Examples were observed to evaluate blended liquid stability.
"Good": Neither precipitation nor non-fluidity due to increased viscosity is observed.
"Poor": Precipitation or non-fluidity due to increased viscosity is observed.

### [Method for Evaluating Crack Resistance]

The appearances of the synthetic leathers obtained in Examples and Comparative Examples were observed, and the presence or absence of crack was confirmed. The synthetic leather in which cracks did not appear was determined as "Good", and the synthetic leather in which a crack appeared was determined as "Poor".

### [Method for Evaluating Texture]

The synthetic leathers obtained in Examples and Comparative Examples were touched with the hand, and evaluated as follows.
"Good": The synthetic leather is soft and elastic.
"Poor": The synthetic leather has low softness and is hard.

**[Table 1]**

| Table 1 | Ex. 1 | Ex. 2 | Ex. 3 | Ex. 4 | Ex. 5 | Comp. Ex. 1 | Comp. Ex. 2 |
|---|---|---|---|---|---|---|---|
| Urethane resin (A) | (A-1) | (A-1) | (A-3) | (A-3) | (A-3) | (A-3) | (A-3) |
| Film-forming aid (C) | BG | BG | PG | BG K-2100W | BG MPEG | | Methanol |
| Surfactant (D) | Ammonium stearate | Ammonium stearate | Ammonium stearate | Ammonium stearate | Ammonium stearate | Ammonium stearate | Ammonium stearate |
| Evaluation of blended liquid stability | Good | Good | Good | Good | Good | Good | Poor |
| Evaluation of crack resistance | Good | Good | Good | Good | Good | Poor | Poor |
| Evaluation of texture | Good | Good | Good | Good | Good | Poor | Poor |

In Examples 1 to 5 using the urethane resin composition of the present invention, it was found that a synthetic leather having excellent blended liquid stability and having excellent crack resistance and texture was obtained.

On the other hand, Comparative Example 1 is an aspect in which the film-forming aid (C) was not used, and the crack resistance and the texture were poor.

Comparative Example 2 is an aspect in which methanol was used in place of the film-forming aid (C), and all of the blended liquid stability, the crack resistance, and the texture were poor.

## Claims

1. A urethane resin composition comprising:
a urethane resin (A) having a hydrophilic group;
water (B); and
a film-forming aid (C) containing a compound (c1) having a molecular weight of 300 or less having two to four alcoholic hydroxy groups.

2. The urethane resin composition according to claim 1, wherein the compound (c1) is 1,3-butanediol and/or propylene glycol.

3. The urethane resin composition according to claim 1 or 2, wherein the hydrophilic group of the urethane resin (A) is an anionic group and/or a nonionic group.

4. The urethane resin composition according to any one of claims 1 to 3, further comprising a surfactant (D) having a hydrophobic moiety having 10 or more carbon atoms.

5. The urethane resin composition according to claim 4, wherein the surfactant (D) is a stearate salt.

6. A laminate comprising at least a substrate (i) and a foaming layer (ii) formed of the urethane resin composition according to any one of claims 1 to 5.

7. The laminate according to claim 6, wherein the foaming layer (ii) is formed by mechanical foaming of the urethane resin composition.
